# EUROPEAN PATENT APPLICATION

(11) **EP 4 270 259 A1**
(43) Date of publication of application: **01.11.2023**
(21) Application number: 23170548.4
(22) Date of filing: 28.04.2023
(51) Int. Cl.: G06N 5/022

(54) **SYSTEMS AND METHODS FOR DEFINING DATA ANALYTICS PIPELINES**

(30) Priority: 29.04.2022 US 202217661327
(71) Applicant: Siemens Mobility, Inc., New York, New York 10119 (US)
(72) Inventor: MARKOV, Georgi, Saint Augustine, FL, 32095 (US); ZWOLINSKI, Peter, Ponte Vedra, FL, 32081 (US)
(74) Representative: Isarpatent

(57) **Abstract**

A system for defining data analytics pipelines with a processor and a memory includes a data source with raw data, a semantic data lake, and a data integration module, wherein the data integration module is configured via computer executable instructions to create semantic annotations that describe a capability and a structure of the raw data of the data source, create or modify a knowledge graph utilizing the semantic annotations, and integrate the raw data and the semantic annotations into the semantic data lake, wherein the raw data are interpretable via the knowledge graph and the semantic annotations.

## Description

### BACKGROUND

### 1. Field

Aspects of the present disclosure generally relate to systems and methods for defining data analytics pipelines.

### 2. Description of the Related Art

In modem data analytics pipelines, data flows from various internal and external sources, gets pre-processed, cleansed, and loaded into a data lake. Typically, data from different sources is not well integrated and the ability to convert this data into actionable insights depends on the ability of data scientists to integrate various data sources at the bit level, and define AI-, physics- or experience-based models to generate the insights and useful information. The process of integrating various data sources is problematic due to the facts that most data scientists do not have a good understanding of the specific application domain and most subject-matter experts do not have the necessary data-science background which requires a time consuming and slow collaboration. This becomes particularly difficult when new data sources become available (e. g. through new sensors being installed on existing devices or new devices being taken in operation) as the existing data pipeline is not able to evolve automatically and thus the new data is not immediately useful for the generation of new insights.

### SUMMARY

A first aspect of the present disclosure provides a system for defining data analytics pipelines including at least one processor and at least one memory, the system comprising a data source comprising raw data, a semantic data lake, and a data integration module, wherein the data integration module is configured via computer executable instructions to create semantic annotations that describe a capability and a structure of the raw data of the data source, create or modify a knowledge graph utilizing the semantic annotations, and integrate the raw data and the semantic annotations into the semantic data lake, wherein the raw data are interpretable via the knowledge graph and the semantic annotations.

A second aspect of the present disclosure provides a method for defining data analytics pipelines, the method comprising through at least one processor and at least one memory, receiving raw data of multiple data sources, creating semantic annotations describing a capability and structure of the raw data of each data source, creating or modifying a knowledge graph utilizing the semantic annotations, and integrating the raw data and the semantic annotations into a semantic data lake, wherein the raw data of the multiple data sources are interpretable via the knowledge graph and the semantic annotations.

A third aspect of the present disclosure provides a non-transitory computer readable medium storing executable instructions that when executed by a computer perform a method for defining data analytics pipelines as described herein.

### BRIEF DESCRIPTION OF THE DRAWINGS

**FIG. 1** illustrates a diagram of a known data analytics workflow.
**FIG. 2** illustrates a diagram of a data analytics pipeline in accordance with an exemplary embodiment of the present disclosure.
**FIG. 3** illustrates a diagram of a semantic data layer to enable semantic integration of heterogeneous data sources in accordance with an exemplary embodiment of the present disclosure.
**FIG. 4A** and **FIG. 4B** illustrate a diagram of a data analytics pipeline/workflow editor in accordance with an exemplary embodiment of the present disclosure.
**FIG. 5** illustrates a flow chart of a method for defining data analytics pipelines in accordance with embodiments of the present disclosure.

### DETAILED DESCRIPTION

To facilitate an understanding of embodiments, principles, and features of the present disclosure, they are explained hereinafter with reference to implementation in illustrative embodiments. In particular, they are described in the context of being systems and methods for defining data analytics pipelines. Embodiments of the present disclosure, however, are not limited to use in the described devices or methods.

The components and materials described hereinafter as making up the various embodiments are intended to be illustrative and not restrictive. Many suitable modules, elements, components and materials that would perform the same or a similar function as described herein are intended to be embraced within the scope of embodiments of the present disclosure.

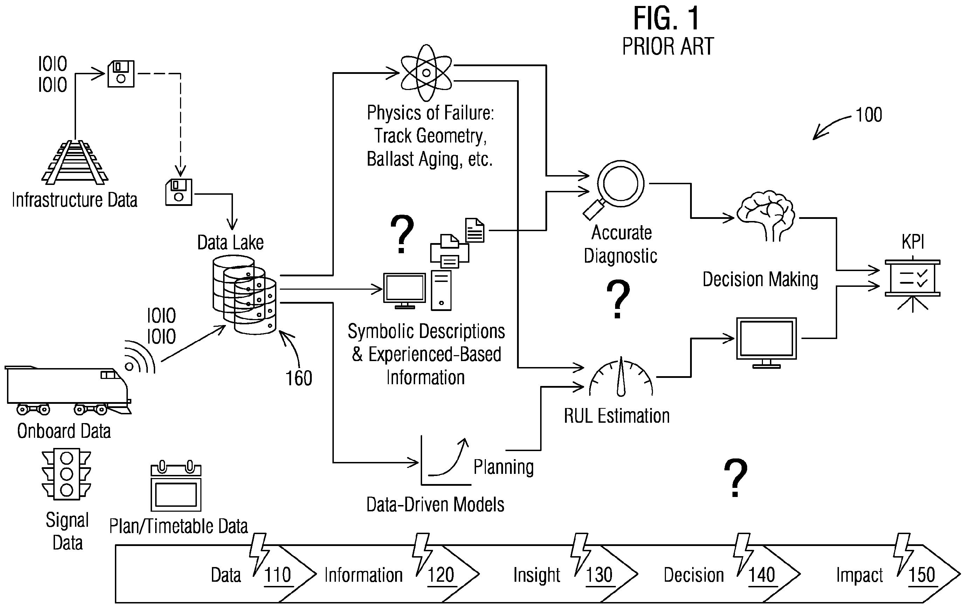

**FIG. 1** illustrates a diagram of a known data analytics workflow 100. Generally, in data analytics pipelines or workflows, such as workflow 100, data flows from various internal and external sources, gets pre-processed, cleansed, and loaded into a data lake. Our example illustrates a workflow for collecting and analyzing data in connection with railroad systems and/or traffic systems.

Data 110 of different data sources include for example infrastructure data, onboard data, signal data and plan/timetable data. Infrastructure data may relate to railroad infrastructure including for example railroad tracks, railroad grade crossing etc. Onboard data may relate to data of a vehicle, such as a train or car, including for example speed data, location data etc., collected and stored by the vehicle. Signal data may relate to signals such as traffic lights or railroad signal lights, and plan/timetable data may relate to train schedules. Of course, the workflow 100 may comprise further data sources and data.

The data 110 are collected and stored in data lake or data warehouse 160. Infrastructure data may be collected via manual batch upload and stored in data lake 160. Onboard data may be transmitted via a real-time data stream to data lake 160. Signal data and plan/timetable data may be manually input or periodically uploaded into data lake 160.

The data 110 from the different sources are not well integrated and the ability to convert this data 110 into useful information 120 and actionable insights 130 depends on the ability of data scientists to integrate the various data sources at the bit level, and define artificial intelligence (AI)-, physics- or experience-based models. Such models or schemes may include data-driven models, planning models, etc. Further, the data 110 and information 120 may include symbolic descriptions and experience-based information. With respect to our example workflow 100 relating to railroad systems/traffic systems data, another aspect to consider is physics of failure. Physics of failure is used to understand how physical, chemical, mechanical, thermal, or electrical stresses can degrade or cause the failure of items or components, specifically in view of the railroad/traffic infrastructure, such as track geometry, ballast aging etc.

The information 120, including different models or schemes, physics of failure etc., is then utilized to generate the actionable insights 130. Insights 130 may be accurate diagnostics, based for example on the symbolic descriptions and experience-based information and the physics of failure. Further insights 130 may include remaining useful life (RUL) estimation(s) based on the physics of failure and data-driven models and planning. Based on the insights 130, corresponding business decisions 140 can be made to achieve an impact 150. For example, an objective of the workflow 100 can be to improve key performance indicators (KPI), which is a type of performance measurement, of a business or company.

As noted, current data analytics pipelines/workflows, such as workflow 100, are rigid and inflexible, and new data from new data sources, e. g. new systems, sensors, may not be directly useful. It is mainly a manual effort to define how the data can be integrated, interpreted, and used for decision making.

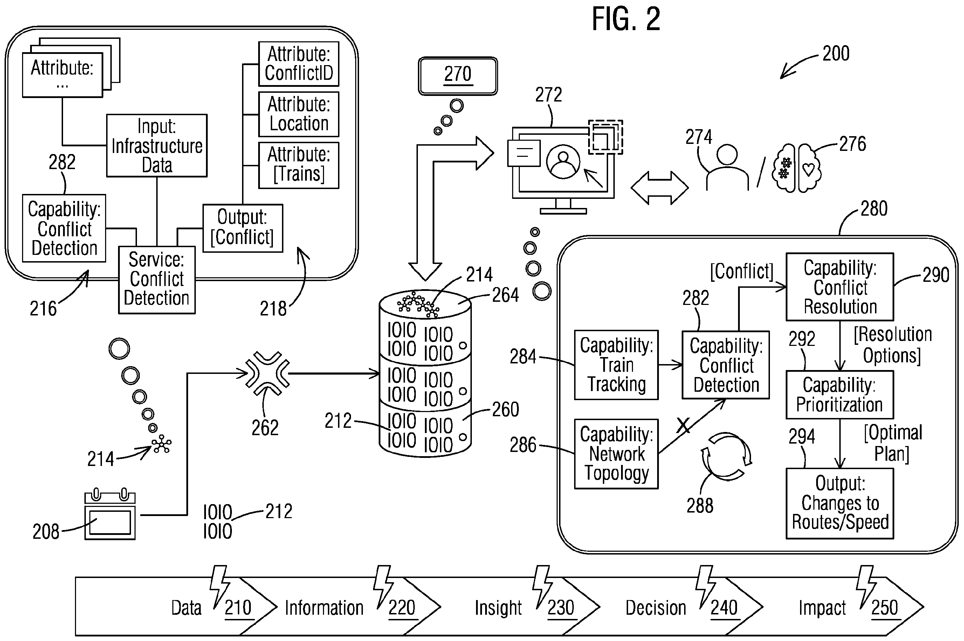

**FIG. 2** illustrates a diagram of a data analytics pipeline 200 in accordance with an exemplary embodiment of the present disclosure. In an embodiment, data analytics pipeline 200 may relate to railroad systems and/or traffic systems, specifically collecting and analyzing data in connection with railroad systems and/or traffic systems.

A plurality of data sources 208 comprise a plurality of data 210 including raw data 212. **FIG. 2** illustrates an example plan/timetable data source 208 comprising data including raw data 212, relating for example to train schedules. However, it should be noted that many more data sources 208, data 210 and raw data 212 may be utilized and processed, such as for example infrastructure data, onboard data, signal data, etc. Infrastructure data may relate to railroad infrastructure including for example railroad tracks, railroad grade crossing etc. Onboard data may relate to data of a vehicle, such as a train or car, including for example speed data, location data etc., collected and stored by the vehicle. Signal data may relate to signals such as traffic lights or railroad signal lights.

In accordance with an exemplary embodiment of the present disclosure, a data integration module 262 is configured via computer executable instructions to create semantic annotations 214 that describe a capability (or multiple capabilities) and/or behavior of the data source 208, and that describe a structure of the raw data 212 of the data source 208. Further, the data integration module 262 is configured to create or modify a knowledge graph 264 utilizing the semantic annotations 214 and to integrate the raw data 212 and the semantic annotations 214 into a semantic data lake 260. The raw data 212 are interpretable via the knowledge graph 264 and the semantic annotations 214. The raw data 212 and the knowledge graph 264 with the semantic annotations 214, are collected and stored in the semantic data lake 260.

The semantic annotations 214 are based on attributes 216, 218 that describe behavior and/or capabilities of the data source 208 as well as structure of the raw data 212. In our example with respect to the plan/timetable source 208, such attributes 216 may include a scheduling conflict detection capability (capability/service). Further, semantic annotations 214 relating to the structure of the raw data 212 describe inputs and/or outputs 218 of the data source 208, and/or a data type of the data source 208. Inputs may include infrastructure data, e. g. railroad network information relating to for example railroad tracks. Outputs may include a conflict, utilizing the conflict detection capability, including conflict ID, locations and trains involved in a conflict. The attributes 216, 218 may be created and provided manually or may be generated automatically, for example by the integration module 262, for example when a new data source 208 is coupled and integrated into the pipeline 200.

The semantic annotations 214 may be created according to a pre-defined schema. Such a pre-defined schema may include semantic annotations 214 based on attributes 216, 218 for at least input, output, and capability/service of the data source 208. Of course, many more attributes 216, 218 and/or semantic annotations 214 may be created, depending for example on the type of data source(s) 208 and data 210, 212.

The knowledge graph 264 is constructed with the semantic annotations 214. The knowledge graph 264 harmonizes entities and relationships from many different data sources 208 and data 210, 212 to common identifiers and is thus able to connect data from numerous heterogeneous data silos, e. g. data sources 208, whether they are external or internal sources 208. This means that a single knowledge graph 264 connects data from many different data sources 208, specifically via common identifiers or common denominators that are shared and utilized by all data sources 208, coupled and integrated into the pipeline 200. Thus, as more data source 208 are integrated, the knowledge graph 264 may evolve, change, grow.

In an exemplary embodiment of the present disclosure, the system/pipeline 200 comprises a knowledge reasoning engine 270 configured to interface with the knowledge graph 264. Generally, the knowledge reasoning engine 270 is configured for interference, evolution, validation of the knowledge graph 264. Specifically, the knowledge reasoning engine 270 facilitates interaction, i. e. is an interface, between the knowledge graph 264 and a user/operator (human) 274, via user interface 272. In another example, either in combination with or instead of user 274, an artificial intelligence (Al) module 276 may interact with the knowledge reasoning engine 270 and the knowledge graph 264.

The knowledge reason engine 270 provides access to and interaction with the knowledge graph 264. For example, the knowledge reasoning engine 270 can be configured to receive inputs, for example from user 274, for creating or modifying the knowledge graph 264 and/or associated workflows, validate and check consistency of the inputs in view of existing connections of the knowledge graph 264 and/or workflows, and create or modify the knowledge graph 264 and/or workflows based on validated or verified inputs.

For example, the knowledge graph 264 in combination with the knowledge reasoning engine 270, can be used to guide domain experts (user/operator 274 and/or AI module 276) to create and/or modify analytics workflows on a basis of capabilities/services (attributes 216, 218) rather than raw data bits (raw data 212). The knowledge reasoning engine 270 provides interactive support during such a process of interaction with the knowledge graph 264, for example via `drag and drop' of attributes 216, 218, automated validation and consistency checking via respectively forward/backward chaining of capabilities, and constraint solving and solving of first order predicate logic rules based on defined inputs/outputs of each capability.

Exemplary process 280 illustrates how the knowledge graph 264 and associated pipeline 200 and workflows may be configured to operate and process data in connection with a modification or integration of a new data source, for example via knowledge reasoning engine 270 interfacing with the knowledge graph 264.

Data analytics pipeline 220 includes conflict detection capability/service 282. Conflict detection capability 282 is described by the attributes 216, 218 and semantic annotations 214 created based on the attributes 216, 218.

New capabilities of the pipeline 200 include train tracking capability 284 and network topology capability 286. Both new capabilities 284, 286 are described by attributes. Integration of train tracking capability 284 is performed, and connection(s) between train tracking capability 284 and conflict detection capability 282 validated and established. Train tacking capability 284 can provide one or more input(s) into conflict detection capability 282. For example, each train may have global identification (GID) data that can be used for conflict detection capability 282, e. g. when detecting a conflict between trains and identifying the trains.

With the modified workflow, a conflict may be detected by the conflict detection capability 282, which is subject to and input into conflict resolution capability 290. In case of multiple resolution options, prioritization capability 292 can select an optimal solution for the detected conflict which may result in changes to train routes and/or traveling speeds of trains, see respective output 294.

Network topology capability 286 relates to rail network topology including railway tracks, grade crossings etc., which is an important aspect when detecting a potential conflict between trains. Thus, network topology capability 286 should be integrated into the pipeline 200, specifically connected to conflict detection capability 282.

User 274 and/or AI module 276 may define, for example via a drag & drop functionality, the network topology capability 286 as an input/influence for the conflict detection capability 282. The pipeline 200, utilizing the knowledge graph 264, performs an automated validation and consistency checking via respectively forward/backward chaining of the capabilities, and constraint solving and solving first order predicate logic rules (SAT solving) based on the defined inputs/outputs of each capability, see integration process 288. In our example, the pipeline 200 is configured to automatically check consistency, validate, and solve predicate logic rules of the network topology capability 286 in connection with the conflict detection capability 282 (and further capabilities that may be affected). While validating, checking and SAT solving, sections or certain parts of the knowledge graph 264 may be modified or new sections created. As shown by the "X" between conflict detection capability 282 and network topology capability 286, integrating or establishing a connection between capabilities 282, 286 has not been successful.

The data analytics pipeline 200 provides results and outputs, see output 294, which can be used to make decisions 240 to achieve a certain impact 250, such as for example improving key performance indicators (KPI), which is a type of performance measurement, of a business or company. In our example, a KPI may be to achieve no conflicts between trains travelling within the railroad network.

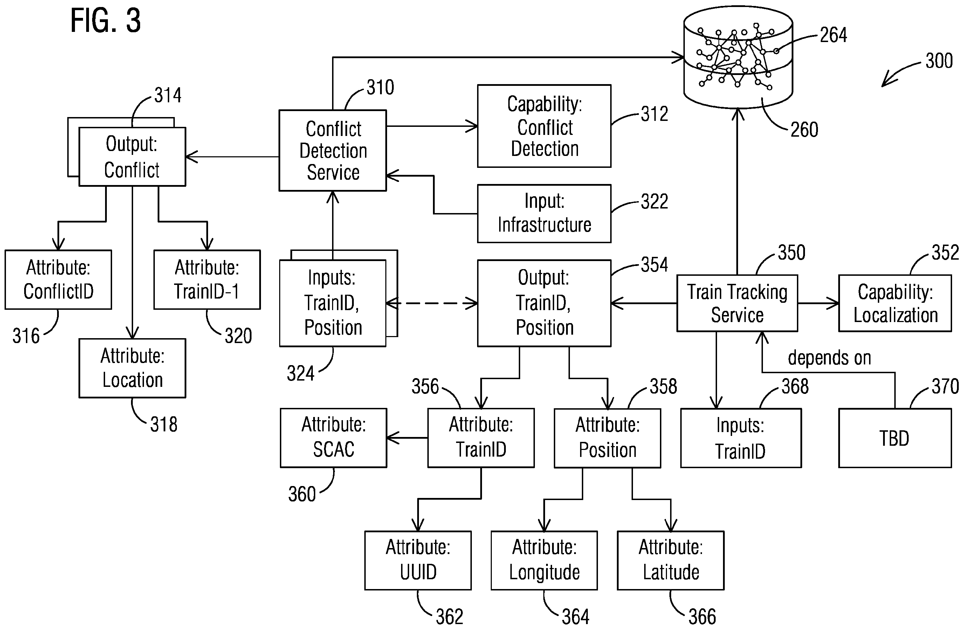

**FIG. 3** illustrates a diagram of a semantic data layer 300 to enable semantic integration of heterogeneous data sources in accordance with an exemplary embodiment of the present disclosure.

Semantic data layer 300 illustrates attributes such as concepts, terms and relationship descriptions, that describe or define behavior(s), service(s), capability(ies), input(s)/output(s) of each data source integrated into a data analytics pipeline, such as for example pipeline 200 as shown in **FIG. 2****.** The semantic data layer 300 with its attributes including concepts, terms and relationship descriptions are used as semantic data annotations (metadata), see annotations 214 in **FIG. 2****,** for the knowledge graph 264. The knowledge graph 264 is stored in the semantic data lake 260, together with the semantic data annotations and raw data of the data sources.

In our example, semantic data annotations are described for conflict detection service 310 and train tracking service 350. Train tracking service 350 provides localization capability 352 and generates output 354 including train ID(s) 356 and train position(s) 358 within the railroad network. Attribute train ID(s) 356 may include standard carrier alpha code (SCAC) information 360 and/or universally unique identifier (UUID) information 362. Attribute train position(s) 358 may include longitude 364 and latitude 366 of the respective position(s) 358. Input(s) 368 for train tracking service 350 are train ID(s) of trains/railroad vehicles relevant and participating in the railroad network. Further inputs or dependencies 370 may be relevant for the train tracking service 350.

As noted, output 354 of train tracking service 350 provides train ID(s) 356 and position(s) 358. The output 354 is an input 324 for conflict detection service 310. Further input(s) for the conflict detection service 310 may include infrastructure data input 322.

Conflict detection service 310 provides conflict detection capability 312. A conflict includes a conflict of trains that may travel on a same track at a same time. Conflict detection service 310 generates output 314 including one or more conflict(s). Specifically, output 314 comprises conflict identification (ID) 316, conflict location 318 and identification 320 of trains involved in the conflict, such as train ID-1 etc.

As shown by double arrows between output 354 and input 324, data/information may be exchanged between the conflict detection service 310 and the train tracking service 350. For example, train tracking service 350 may provide train ID(s) and/or updated train position(s) when using the data analytics pipeline, wherein the updated train ID(s) and position(s) are then supplied to the conflict detection service 310. Output 354 may be continually or periodically updated, for example updated in real-time based on real-time information transmitted by trains travelling in the railroad network.

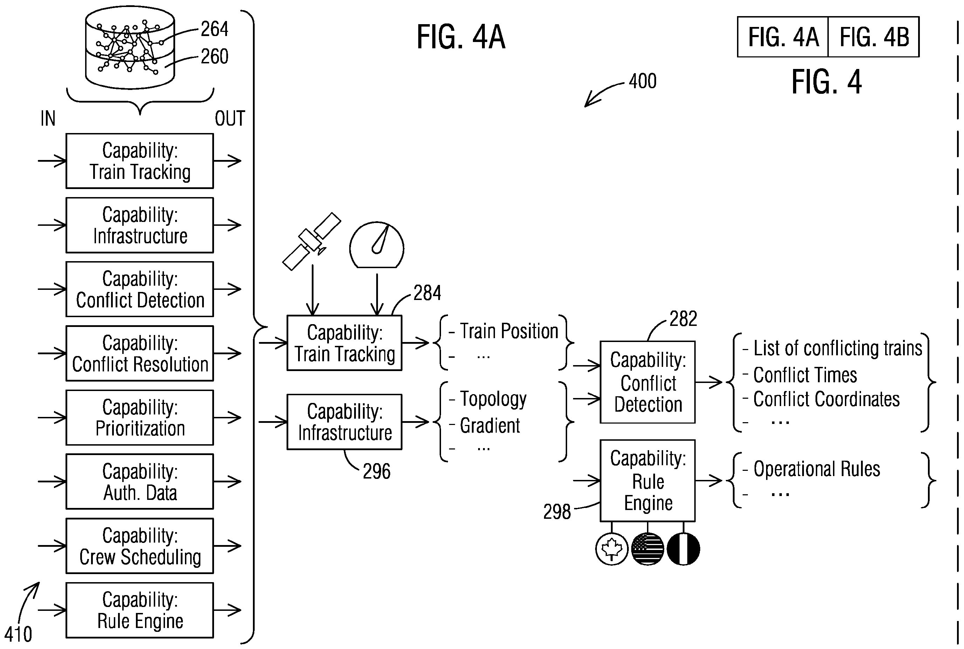

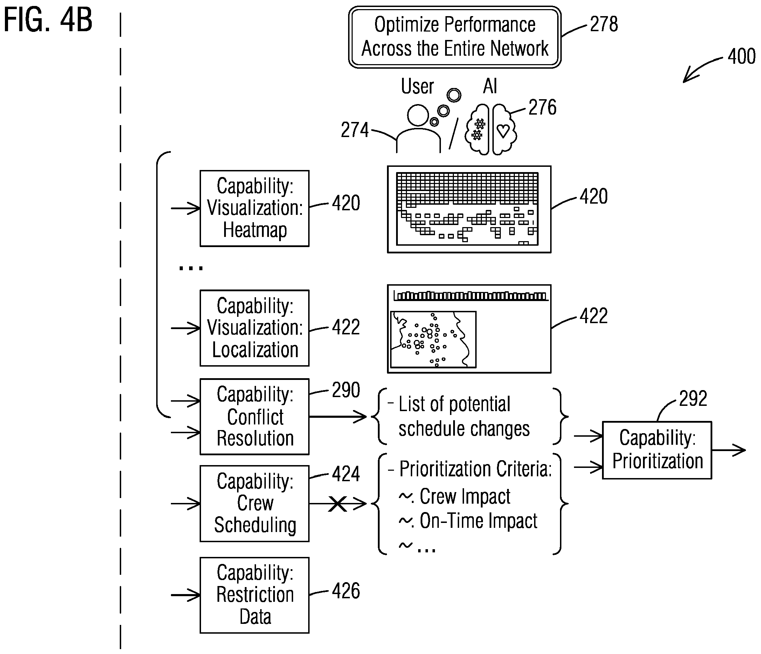

**FIG. 4A** and **FIG. 4B** illustrate a diagram of a data analytics pipeline/workflow editor 400 in accordance with an exemplary embodiment of the present disclosure.

As described earlier, the knowledge reasoning engine 270, see **FIG. 2****,** is configured to interface with the knowledge graph 264. For example, the knowledge reasoning engine 270 facilitates interaction between the knowledge graph 264 and a user/operator (human) 274 and/or AI module 276.

A plurality of capabilities or services 410 are available, wherein each capability 410 comprises a data input and a data output. The capabilities 410 may comprise train tracking capability, infrastructure capability, conflict detection capability, conflict resolution capability, prioritization capability, authentication data capability, crew scheduling capability, rule engine capability. It should be noted that more, less or different capabilities may be available in the system/pipeline.

An objective 278 of the data analytics pipeline 200 may be to optimize performance across the entire railroad network (see also impact 250 in **FIG. 2****).** Such an objective 278 is formulated by user 274 and/or provided by AI-module 276. In view of the objective 278, the user 274/AI-module 276 can create or modify analytics workflows, for example with respect to train tracking capability 284 and infrastructure capability 296. New inputs for train tracking capability 284 may include global positioning system (GPS) data and tachometer data. Train tracking capability 284 generates for example an output of train position(s), etc. Infrastructure capability 296 generates for example outputs of topology and gradient. Outputs of both capabilities 284, 296, e. g. train position(s), topology, gradient, etc., are input into conflict detection capability 282, wherein conflict detection capability 282 provides for example a list of conflicting trains, conflict times, conflict coordinates etc.

Further, legal regulations of countries where the railroad network and trains are operated must be considered. In our example, legal regulations of Canada, the United States of America and Mexico, i. e. North America, are considered, input, and applied via rule engine capability 298. Rule engine capability 298 provides operational rules based on legal and operational regulations.

Outputs of conflict detection capability 282, such as list of conflicting trains, conflict times, conflict coordinates, are input and utilized by further capabilities/services including visualization capabilities such as heatmap visualization capability 420 and localization visualization capability 422. Outputs of the conflict detection capability 282 may be further input into conflict resolution capability 290. Further input(s) for conflict resolution capability 290 are the operational rules provides by rule engine capability 298.

Conflict resolution capability 290 may generate for example a list of potential train schedule changes to avoid conflicts between trains (output). To accommodate potential train schedule changes, changes may need to be made to working plans, working hours, dates/times of crew members, such as train operators or train engineers. Thus, crew scheduling capability 424 is considered. For example, crew scheduling capability 424 can be added to the workflow via drag & drop functionality of knowledge reasoning engine 270 (see **FIG. 2**). Crew scheduling capability 424 may include certain prioritization criteria, such as crew impact, on-time impact etc. Output of conflict resolution capability 290, e. g. list of potential train schedule changes, and prioritization criteria of crew scheduling capability 424 are input to prioritization capability 292.

User 274 and/or AI-module 276 may further add restriction data capability 426 (via the drag & drop functionality) to the workflow/analytic pipeline.

As described earlier, the knowledge graph 264 is used to the user 274, for example domain experts, and/or AI-module 276 to create and modify analytics workflows on the basis of capabilities, such as train tracking capability 284 and infrastructure capability 296, rather than raw data bits, thus providing interactive support during the process, in particular via drag & drop functionality, automated validation and consistency checking via respectively forward/backward chaining of capabilities, and constraint solving and first order predicate logic rules on the basis of the defined inputs/outputs of each capability, facilitated by the knowledge reasoning engine 270.

In another embodiment of the present disclosure, the knowledge reasoning engine 270 is configured to discover new facts and/or new undefined relationships between data sources, utilizing AI-algorithms, such as random walk, path-recurrent neural network, or reinforcement learning algorithms, in such a way to provide the basis for defining new or expanding existing analytics workflows and pipelines.

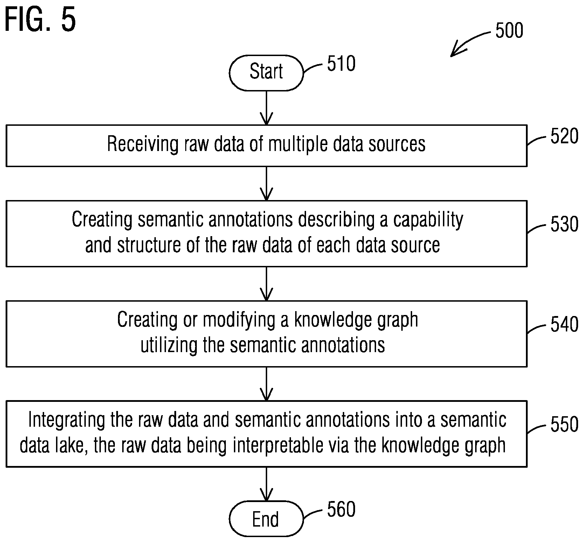

**FIG. 5** illustrates a flow chart of a method 500 for defining data analytics pipelines in accordance with embodiments of the present disclosure. In an example, the method 500 may be performed utilizing an arrangement/system 200 as described with reference to **FIG. 2****.**

While the method 500 is described as a series of acts or steps that are performed in a sequence, it is to be understood that the method 500 may not be limited by the order of the sequence. For instance, unless stated otherwise, some acts may occur in a different order than what is described herein. In addition, in some cases, an act may occur concurrently with another act. Furthermore, in some instances, not all acts may be required to implement a methodology described herein.

The method 500 may start at 510 and comprises an act 520 of receiving raw data of multiple data sources, an act 530 of creating semantic annotations describing a capability and structure of the raw data of each data source, an act 540 of creating or modifying a knowledge graph utilizing the semantic annotations, and an act 550 integrating the raw data and the semantic annotations into a semantic data lake, wherein the raw data of the multiple data sources are interpretable via the knowledge graph and the semantic annotations. At 560, the method 500 may end.

Act 540 of creating or modifying the knowledge graph may be based on common identifiers that connect the raw data of the multiple data sources. Act 530 of creating the semantic annotations comprises creating attributes that describe the capability and/or behavior, and inputs and/or outputs of each data source.

In another embodiment, the method 500 further comprises interfacing with the knowledge graph via a knowledge reasoning engine. The method 500 may comprise, via the knowledge reasoning engine, receiving user inputs for creating or modifying the knowledge graph, and validating and checking consistency of the user inputs in view of existing connections and semantic annotations of the knowledge graph. Further, the method 500 may comprise, via the knowledge reasoning engine, discovering and defining relationships between the multiple data sources utilizing artificial intelligence (AI)-algorithms.

In another exemplary embodiment of the present disclosure, a non-transitory computer readable medium storing executable instructions is provided, wherein the executable instructions, when executed by a computer perform a method for defining data analytics pipelines as described herein, specifically as described in method 500 with reference to **FIG. 5** and system 200 with reference to **FIG. 2****.**

It should be appreciated that acts associated with the above-described methodologies, features, and functions (other than any described manual acts) may be carried out by one or more data processing systems, via operation of at least one processor. As used herein, a processor corresponds to any electronic device that is configured via hardware circuits, software, and/or firmware to process data. For example, processors described herein may correspond to one or more (or a combination) of microprocessor, CPU, or any other integrated circuit (IC) or other type of circuit that is capable of processing data in a data processing system. The at least one processor that is described or claimed as being configured to carry out a particular described/claimed process or function may correspond to a CPU that executes computer/processor executable instructions stored in a memory in form of software and/or firmware to carry out such a described/claimed process or function. However, it should also be appreciated that such a processor may correspond to an IC that is hard wired with processing circuitry (e.g., an FPGA or ASIC IC) to carry out such a described/claimed process or function.

The described systems and methods make use of semantic data annotations (metadata), wherein the semantic information provides an abstraction layer to raw data and a formal semantic to allow the generation of a knowledge graph. Raw data and semantic annotations from heterogenous sources (internal and external) are automatically integrated into a semantic data lake and made machine interpretable via the knowledge graph. A definition of the knowledge graph ensures harmonization of entities and relationships from various data sources, thus also identifies similar capabilities provided by different data sources. The knowledge graph enables reasoning and automatic discovery of new analytics pipelines and workflows based on information about inputs, outputs, and capabilities of new data sources. The knowledge graph also interactively supports users, such as domain experts, in defining their own analytics pipelines and workflows by allowing them to interact with the underlying raw data at a level of capabilities rather than bits and bytes. The semantic data lake continuously evolves as new data sources are added. This allows for analytics pipelines and workflows to automatically, or with minimal effort, in a a short time utilize the newly available data. Using Al-algorithms implemented as part of the knowledge reasoning engine, new knowledge can be discovered and quickly incorporated into new and/or existing pipelines and workflows.

### Further embodiments

1. A system for defining data analytics pipelines including at least one processor and at least one memory, the system comprising:
   a data source comprising raw data,
   a semantic data lake, and
   a data integration module, wherein the data integration module is configured via computer executable instructions to
      create semantic annotations that describe a capability and a structure of the raw data of the data source,
      create or modify a knowledge graph utilizing the semantic annotations, and
      integrate the raw data and the semantic annotations into the semantic data lake, wherein the raw data are interpretable via the knowledge graph and the semantic annotations.
2. The system of embodiment 1, wherein the semantic annotations are created according to a pre-defined schema.
3. The system of embodiment 1, comprising a plurality of data sources, each data source comprising raw data, wherein the knowledge graph comprises common identifiers to connect the raw data of the plurality of data sources.
4. The system of embodiment 3, wherein the data integration module is configured to
   create the semantic annotations for each data source, and
   create or modify the knowledge graph for the plurality data sources based on the semantic annotations and the common identifiers.
5. The system of embodiment 1, wherein the semantic annotations are based on attributes that describe the capability and/or behavior of the data source.
6. The system of embodiment 1, wherein the semantic annotations are based on inputs and/or outputs and a data type of the data source.
7. The system of embodiment 3, wherein the plurality of data sources comprise data relating to railroad systems and/or traffic systems including infrastructure data, onboard vehicle data, signal data, plan/timetable table.
8. The system of embodiment 1, further comprising:
   a knowledge reasoning engine configured to interface with the knowledge graph.
9. The system of embodiment 8, wherein the knowledge reasoning engine is configured to
   receive user inputs for creating or modifying the knowledge graph, and
   validate and check consistency of the inputs in view of existing connections and semantic annotations of the knowledge graph.
10. The system of embodiment 9, wherein the knowledge reasoning engine is configured to solve first order logic rules based on inputs and/or outputs of each data source and associated capability.
11. The system of embodiment 10, wherein the knowledge reasoning engine is configured to create or modify the knowledge graph and associated workflows based on received and validated user inputs.
12. The system of embodiment 8, wherein the knowledge reasoning engine is configured to discover and define relationships between data sources utilizing artificial intelligence (AI)-algorithms.
13. The system of embodiment 12, wherein the AI-algorithms comprise random walk, path-recurrent neural network, and/or reinforcement learning algorithms.
14. A method for defining data analytics pipelines, the method comprising through at least one processor and at least one memory:
   receiving raw data of multiple data sources,
   creating semantic annotations describing a capability and structure of the raw data of each data source,
   creating or modifying a knowledge graph utilizing the semantic annotations, and
   integrating the raw data and the semantic annotations into a semantic data lake, wherein the raw data of the multiple data sources are interpretable via the knowledge graph and the semantic annotations.
15. The method of embodiment 14,
   creating or modifying the knowledge graph based on common identifiers that connect the raw data of the multiple data sources.
16. The method of embodiment 14, wherein creating the semantic annotations comprises creating attributes that describe the capability and/or behavior, and inputs and/or outputs of each data source.
17. The method of embodiment 14, further comprising:
   interfacing with the knowledge graph via a knowledge reasoning engine.
18. The method of embodiment 17, further comprising, via the knowledge reasoning engine,
   receiving user inputs for creating or modifying the knowledge graph, and
   validating and checking consistency of the user inputs in view of existing connections and semantic annotations of the knowledge graph.
19. The method of embodiment 17, further comprising, via the knowledge reasoning engine,
   discovering and defining relationships between the multiple data sources utilizing artificial intelligence (AI)-algorithms.
20. A non-transitory computer readable medium storing executable instructions that when executed by a computer perform a method for defining data analytics pipelines as claimed in embodiment 14.

## Claims

1. A system (200) for defining data analytics pipelines including at least one processor and at least one memory, the system (200) comprising:
a data source (208) comprising raw data (212),
a semantic data lake (260), and
a data integration module (262), wherein the data integration module (262) is configured via computer executable instructions to
create semantic annotations (214) that describe a capability and a structure of the raw data (212) of the data source (208),
create or modify a knowledge graph (264) utilizing the semantic annotations (214), and
integrate the raw data (212) and the semantic annotations (214) into the semantic data lake (260), wherein the raw data (212) are interpretable via the knowledge graph (264) and the semantic annotations (214).

2. The system (200) of claim 1, wherein the semantic annotations (214) are created according to a pre-defined schema.

3. The system (200) of claim 1 or 2, comprising a plurality of data sources (208), each data source comprising raw data (212), wherein the knowledge graph (264) comprises common identifiers to connect the raw data (212) of the plurality of data sources (208).

4. The system (200) of claim 3, wherein the data integration module (262) is configured to
create the semantic annotations (214) for each data source (208), and
create or modify the knowledge graph (264) for the plurality data sources (208) based on the semantic annotations (214) and the common identifiers.

5. The system (200) according to any of the preceding claims, wherein the semantic annotations (214) are based on attributes that describe the capability and/or behavior of the data source (208).

6. The system (200) according to any of the preceding claims, wherein the semantic annotations (214) are based on inputs and/or outputs and a data type of the data source (208).

7. The system (200) of claim 3, wherein the plurality of data sources (208) comprise data relating to railroad systems and/or traffic systems including infrastructure data, onboard vehicle data, signal data, plan/timetable table.

8. The system (200) according to any of the preceding claims, further comprising:
a knowledge reasoning engine (270) configured to interface with the knowledge graph (264), wherein the knowledge reasoning engine (270) is in particular configured to
receive user inputs for creating or modifying the knowledge graph (264), and
validate and check consistency of the inputs in view of existing connections and semantic annotations (214) of the knowledge graph (264).

9. The system (200) of claim 8, wherein the knowledge reasoning engine (270) is configured to solve first order logic rules based on inputs and/or outputs of each data source (208) and associated capability, wherein the knowledge reasoning engine (270) is in particular configured to create or modify the knowledge graph (264) and associated workflows based on received and validated user inputs.

10. The system (200) of claim 8 or 9, wherein the knowledge reasoning engine (270) is configured to discover and define relationships between data sources (208) utilizing artificial intelligence (AI)-algorithms.

11. The system (200) of claim 10, wherein the AI-algorithms comprise random walk, path-recurrent neural network, and/or reinforcement learning algorithms.

12. A method (500) for defining data analytics pipelines, the method (500) comprising through at least one processor and at least one memory:
receiving (520) raw data (212) of multiple data sources (208),
creating (530) semantic annotations (214) describing a capability and structure of the raw data (212) of each data source (208),
creating or modifying (540) a knowledge graph (264) utilizing the semantic annotations (214), and
integrating (550) the raw data (212) and the semantic annotations (214) into a semantic data lake (260), wherein the raw data (212) of the multiple data sources (208) are interpretable via the knowledge graph (264) and the semantic annotations (214).

13. The method (500) of claim 12, further comprising:
creating or modifying (540) the knowledge graph (264) based on common identifiers that connect the raw data (212) of the multiple data sources (208).

14. The method according to any of the preceding method-based claims, wherein creating (530) the semantic annotations (214) comprises creating attributes that describe the capability and/or behavior, and inputs and/or outputs of each data source (208).

15. The method (500) according to any of the preceding method-based claims, further comprising at least one of:
interfacing with the knowledge graph (264) via a knowledge reasoning engine (270), further comprising, via the knowledge reasoning engine (270),
receiving user inputs for creating or modifying the knowledge graph (264),
validating and checking consistency of the user inputs in view of existing connections and semantic annotations (214) of the knowledge graph (264), and
discovering and defining relationships between the multiple data sources (208) utilizing artificial intelligence (AI)-algorithms.
